# FASCICULE DE BREVET EUROPEEN

(11) **EP 2 663 762 B1**
(45) Date de publication et mention de la délivrance du brevet: **25.11.2015**
(21) Numéro de dépôt: 12702602.9
(22) Date de dépôt: 10.01.2012
(51) Int. Cl.: F02K 1/70

(54) **PORTE POUR INVERSEUR DE POUSSÉE D'UNE NACELLE D'UN AÉRONEF**
TÜR FÜR EINE SCHUBUMKEHRVORRICHTUNG EINER TRIEBWERKSGONDEL
DOOR FOR THRUST REVERSER OF AN AIRCRAFT NACELLE

(30) Priorité: 14.01.2011 FR 1150297
(43) Date de publication de la demande: 20.11.2013
(73) Titulaire: Aircelle, 76700 Gonfreville L'Orcher (FR)
(72) Inventeur: CHAPELAIN, Loïc, F-94320 Thiais (FR); GUILLOIS, Denis, F-91470 Limours (FR)
(74) Mandataire: Gaillarde, Frédéric F. Ch.
(86) Numéro de dépôt international: PCT/FR2012/050058
(87) Numéro de publication internationale: WO 2012/095599

(56) Documents cités:
- EP-A1- 0 301 939
- FR-A1- 2 916 484

## Description

L'invention se rapporte à une porte pour inverseur de poussée d'une nacelle d'un aéronef apte à être montée pivotante sur une structure fixe de la nacelle comprenant une surface interne conçue pour s'intégrer à une veine annulaire de circulation d'un flux d'air et une surface externe conçue pour assurer la continuité aérodynamique externe de la nacelle destinée à être équipée dudit inverseur de poussée.

L'inventions se rapporte également à un système d'inverseur de poussée comprenant au moins une telle porte, ainsi qu'à une nacelle pour turboréacteur.

Un aéronef est mu par plusieurs turboréacteurs logés chacun dans une nacelle abritant également un ensemble de dispositifs d'actionnement annexes liés à son fonctionnement et assurant diverses fonctions lorsque le turboréacteur est en fonctionnement ou à l'arrêt. Ces dispositifs d'actionnement annexes comprennent notamment un système mécanique d'actionnement d'inverseur de poussée.

Une nacelle présente généralement une structure tubulaire suivant un axe longitudinal comprenant une entrée d'air en amont du turboréacteur, une section médiane destinée à entourer une soufflante du turboréacteur, une section aval abritant des moyens d'inversion de poussée et destinée à entourer la chambre de combustion du turboréacteur. La structure tubulaire est généralement terminée par une tuyère d'éjection dont la sortie est située en aval du turboréacteur.

Les nacelles modernes sont destinées à abriter un turboréacteur double flux apte à générer, par l'intermédiaire des pales de la soufflante en rotation, un flux d'air chaud (également appelé « flux primaire ») issu de la chambre de combustion du turboréacteur, et un flux d'air froid (« flux secondaire ») qui circule à l'extérieur du turboréacteur à travers un passage annulaire, également appelé « veine annulaire».

On entend ici par le terme « aval » la direction correspondant au sens du flux d'air froid pénétrant dans le turboréacteur. Le terme « amont » désigne la direction opposée.

Ladite veine annulaire est formée en section aval par une structure externe, dite Outer Fixed Structure (OFS) et une structure interne concentrique, dite Inner Fixed Structure (IFS), entourant la structure du moteur proprement dite à l'aval de la soufflante. Les structures interne et externe appartiennent à la section aval. La structure externe peut comporter une ou plusieurs portes mobiles en rotation de manière à pouvoir, sous l'action de moyens d'entraînement, basculer entre une position inactive de fermeture, lors d'un fonctionnement du turboréacteur, dit « en jet direct », dans laquelle les portes constituent une partie de la section aval, et une position d'inversion ou position d'ouverture dans laquelle elles basculent de sorte qu'une partie aval de chaque porte vienne obstruer au moins partiellement le conduit de la nacelle et qu'une partie amont ouvre dans la section aval un passage permettant au flux d'air d'être canalisé radialement par rapport à un axe longitudinal de la nacelle.

Afin de pouvoir améliorer la réorientation du flux d'air dans une direction tendant au plus près à une direction longitudinale de la nacelle, des portes ont été équipées de becquets terminaux, également appelés déflecteurs, formant en amont de la porte un retour sensiblement perpendiculaire au plan formé par cette dernière. Ainsi, lorsque la porte est en position d'inversion de poussée, le becquet est orienté dans une direction sensiblement longitudinale de la nacelle et force le flux d'air dans cette direction.

Lorsque la porte est en position de fermeture, chaque becquet est orienté selon une direction sensiblement perpendiculaire à l'axe longitudinal de la nacelle et pénètre dans la veine de circulation du flux d'air. Le becquet risque alors de venir bloquer le flux d'air circulant en jet direct, ce qui n'est pas admissible.

Pour pallier cet inconvénient, des portes ont été conçues de manière à présenter une cavité amont au niveau d'une surface interne de ladite porte. De ce fait, la porte présente en amont une épaisseur réduite qui permet à la fois au becquet de venir en saillie de ladite porte et de ne pas posséder une longueur supérieure à l'épaisseur de la nacelle en amont de la porte afin de ne pas pénétrer dans la veine annulaire de circulation du flux d'air lorsque la porte est en position de fermeture.

Cependant, une telle cavité constitue un accident aérodynamique important à l'intérieur de la veine annulaire de circulation d'air lorsque la porte est en position de fermeture, ce qui diminue les performances générales du turboréacteur.

Il est connu de la demande FR2916484 des becquets mobiles en rotation suivant un plan perpendiculaire au plan de la porte, appelé « plan de déflection ».

Malgré les avantages que procure le fonctionnement de tels becquets, il peut s'avérer intéressant d'augmenter la surface frontale de chaque becquet en contact avec le flux d'air dévié afin d'améliorer l'orientation de l'ensemble du flux d'air dévié.

Il existe donc un besoin d'un inverseur de poussée comprenant une porte assurant la continuité aérodynamique de l'intérieur de la veine annulaire de circulation d'air, associée à un système de déflexion simple à installer, non encombrant et fiable à utiliser tout en permettant d'augmenter la surface des moyens de déflection en contact avec le flux d'air dévié.

Pour répondre à un tel besoin, EP 0 301 939 propose une porte pour inverseur de poussée d'une nacelle d'un aéronef apte à être montée pivotante sur une structure fixe de la nacelle comprenant une surface interne conçue pour s'intégrer à une veine annulaire de circulation d'un flux d'air et une surface externe conçue pour assurer la continuité aérodynamique externe de la nacelle destinée à être équipée dudit inverseur de poussée,
ladite porte étant équipée de moyens de déflexion du flux d'air disposés au niveau d'une extrémité amont de la porte et montés mobiles dans un plan de déflexion sensiblement perpendiculaire au plan de la porte entre une première position rétractée dans laquelle les moyens de déflexion ne pénètrent pas dans la veine annulaire lorsque la porte est en position de fermeture, et une deuxième position déployée dans laquelle les moyens de déflexion viennent en saillie de la porte lorsque la porte est en position d'ouverture, chaque moyen de déflexion étant associé à ses extrémités à un bras d'articulation mobile en rotation suivant un axe de pivotement sensiblement perpendiculaire au plan de déflexion permettant un déplacement rectiligne dudit moyen de déflexion dans le plan de déflexion lors du passage de la position rétractée à la position déployée.

Ainsi, grâce au bras d'articulation, les moyens de déflection sont mis en mouvement selon un déplacement sensiblement rectiligne dans le plan de déflexion. La porte de l'invention présente ainsi un système de déflexion simple à installer, non encombrant et fiable à utiliser.

En outre, le déplacement rectiligne des moyens de déflection autorise que la totalité de la surface des moyens de déflection puisse être au contact du flux d'air dévié. Par conséquent grâce à la porte de l'invention, la taille des moyens de déflection peut être optimsier en fonction de la taille désirée de la surface en contact avec le flux d'air dévié.

En outre, de manière avantageuse, le réglage de la cinématique des moyens de déflection peut être réalisé simplement par le réglage de la cinématique des bras d'articulation.

Il est également possible de reprendre les efforts aérodynamiques des moyens de déflection par les bras d'articulation sans avoir recours à des dispositifs supplémentaires de type glissière ou patin de frottement.

Il est enfin envisageable de synchroniser l'ensemble des moyens de déflection lorsque lesdits moyens atteignent la position déployée.

La présente invention a notamment pour but de fournir une porte pour inverseur de poussée selon EP 0 301 939 qui soit d'une conception améliorée.

On atteint ce but de l'invention avec la revendication 1 ci-annexée, dont les caractéristiques permettent un gain de place et de masse tout en permettant une retenue efficace des moyens de déflection en position rétractée.

Selon d'autres caractéristiques de l'invention, la porte de l'invention comporte l'une ou plusieurs des caractéristiques optionnelles suivantes considérées seules ou selon toutes les combinaisons possibles :
- les moyens de déflexion comprennent chacun un moyen de butée disposé à une extrémité de chaque moyen de déflexion de sorte à bloquer la position des moyens de déflexion en position déployée ce qui permet de limiter le déploiement des moyens de déflection et d'éviter d'endommager les extrémités voisines de deux moyens de déflection ;
- les bras d'articulation comportent à chaque extrémité au moins un moyen de retour élastique, notamment sous la forme de ressort à spirale, permettant de passer de la position rétractée à la position déployée ce qui permet de manière simple et efficace d'assurer le retour à la position déployée lorsque la nacelle recevant la porte de l'invention est en position d'inversion de poussée ;
- les moyens de déflexion comprennent au moins deux becquets ou deux volets montés de part et d'autre d'un axe médian de la porte.

Selon un autre aspect, l'invention a pour objet un système d'inverseur de poussée comprenant au moins une porte selon l'invention et une structure fixe sur laquelle ladite porte est montée pivotante entre une position de fermeture dans laquelle elle ferme l'inverseur de poussée et constitue une partie d'un capotage extérieur, les moyens de déflexion du flux étant en position rétractée, et une position d'ouverture dans laquelle elle dégage un passage dans la structure fixe de sorte à dévier le un flux d'air, les moyens de déflexion étant en position déployée.

Préférentiellement, le système d'inverseur de poussée selon l'invention comprend des moyens de butée fixés sur la structure fixe de sorte à recevoir et à bloquer les extrémités adjacentes de deux moyens de déflection en position rétractée ce qui permet de manière simple et peu encombrante de bloquer les moyens de déflection en position rétractée.

L'invention a également pour objet une nacelle pour turboréacteur comprenant au moins un système d'inverseur de poussée selon la l'invention.

L'invention sera davantage comprise à la lecture de la description non limitative qui va suivre, faite en référence aux figures ci-annexées.
- la figure 1 est une coupe schématique partielle d'un mode de réalisation d'une nacelle de l'invention ;
- les figures 2 et 3 sont des coupes transversales schématiques partielles d'une porte d'un inverseur de poussée selon l'invention dans une position respectivement fermée et ouverte ;
- la figure 4 est une vue en perspective partielle et schématique d'une porte de l'invention en position d'ouverture (encore appelé « jet reverse ») montée sur une nacelle correspondant au mode de réalisation de la figure 1 ;
- la figure 5 est une vue de face schématique et partielle d'une porte employée dans le mode de réalisation de la figure 4 avec des moyens déflection en position rentrée ;
- la figure 6 est une vue de face schématique et partielle d'une porte employée dans le mode de réalisation de la figure 4 avec des moyens déflection en position déployée.

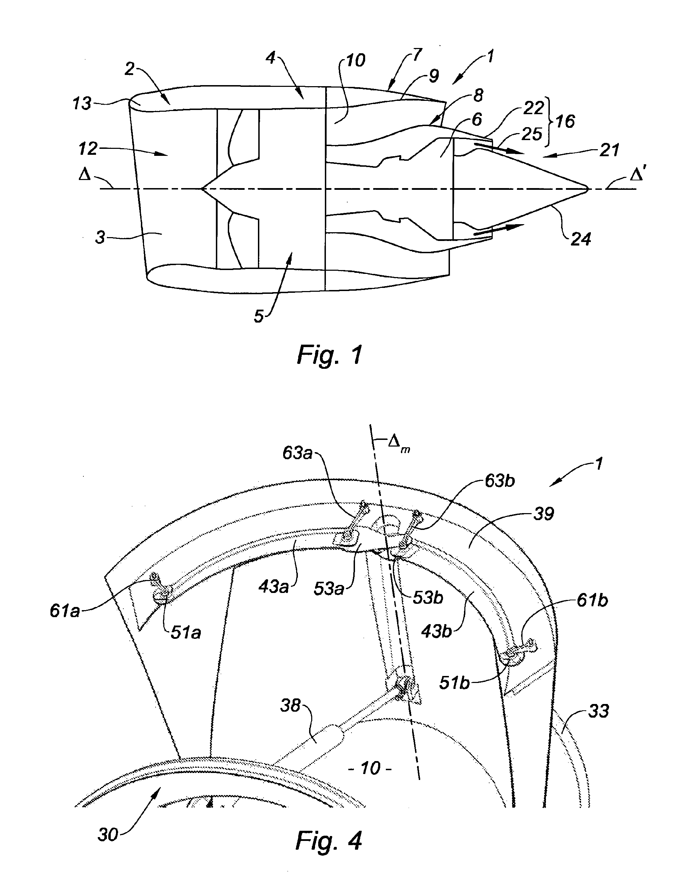

Comme représenté sur la figure 1, une nacelle 1 selon l'invention présente une forme sensiblement tubulaire selon un axe longitudinal Δ. La nacelle de l'invention 1 comprend une section amont 2 avec une lèvre d'entrée d'air 13 formant une entrée d'air 3, une section médiane 4 entourant une soufflante 5 d'un turboréacteur 6 et une section aval 7. La section aval 7 comprend une structure interne 8 (généralement appelée « IFS ») entourant la partie amont du turboréacteur 6, une structure externe (OFS) 9 supportant un capot mobile (non représenté) comportant des moyens d'inversion de poussée.

L'IFS 8 et l'OFS 9 délimite une veine annulaire 10 permettant la circulation d'un flux d'air 12 pénétrant la nacelle 1 de l'invention au niveau de l'entrée d'air 3.

La nacelle 1 de l'invention se termine par une tuyère d'éjection 21 comprenant un module externe 22 et un module interne 24. Les modules interne 24 et externe 22 définissent un canal d'écoulement d'un flux d'air chaud 25 sortant du turboréacteur 6.

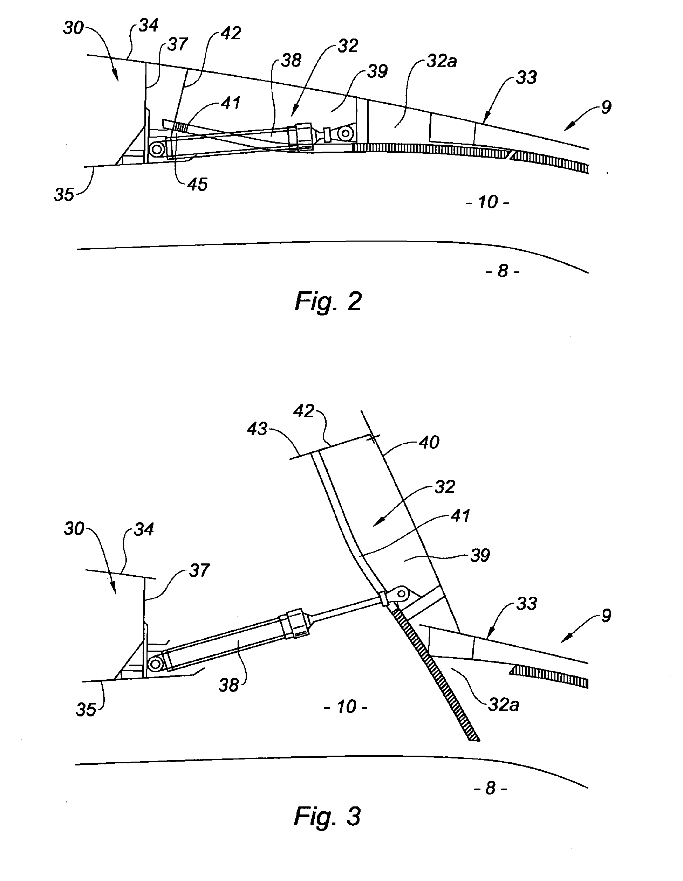

Selon le mode de réalisation représenté aux figures 2 et 3, un inverseur de poussée à porte comporte des portes équipées d'un moyen de déflection sour la forme d'un becquet. Dans une variante, les moyens de déflection peuvent être sous la forme d'une pluralité de volets. Un volet se distingue d'un becquet par le fait qu'il présente une partie inférieure inclinée par rapport à une partie supérieure plane, ladite partie inférieure présentant également une courbure visant à optimiser la réorientation du flux d'air inversé.

L'inverseur de poussée avec des portes à becquet comprend typiquement trois parties principales, à savoir une partie fixe sous la forme d'un panneau amont 30 situé en amont dans l'OFS 9, une partie mobile 32 en aval du panneau amont 30, et une virole aval 33 fixe. La partie fixe 30 comprend un panneau externe 34 assurant la continuité aérodynamique de la surface externe de la nacelle 1, et un panneau interne 35 constituant un panneau externe de la veine annulaire 10. Les panneaux externe 34 et interne 35 sont reliés par un cadre avant 37 qui assure également le support des moyens de commande de la partie mobile 32, constitué en l'espèce par un vérin 38.

La partie mobile 32 comporte typiquement un ou plusieurs éléments déplaçables communément appelés portes 39. Chaque porte 39 est montée pivotante selon un axe de rotation sensiblement colinéaire au plan formé par chaque porte 39 et sensiblement perpendiculaire à l'axe longitudinal Δ de la nacelle de l'invention.

De ce fait, sous l'action des moyens de commande 38, chaque porte 39 peut basculer entre une position dans laquelle elle assure la continuité structurelle entre le panneau amont 30 et la virole aval 33 et une position d'ouverture dans laquelle ladite porte 39 dégage un passage entre le panneau amont 30 et la virole aval 33 permettant un échappement du flux d'air par ladite ouverture.

Comme représenté sur la figure 3, lors de ce pivotement, une partie aval de la porte 32a vient bloquer au moins partiellement la veine annulaire 10 forçant ainsi le flux à circuler par l'ouverture dégagée.

D'un point de vue structurel, la porte 39 comprend, d'une part, un panneau externe 40 venant, en jet direct, se placer dans le prolongement du panneau externe du panneau amont 30 fixe et assurer une continuité aérodynamique extérieure avec un panneau 45 externe de la partie arrière (voir figure 2), et d'autre part, un panneau interne 41 et un cadre amont 42 reliant le panneau externe 40 et le panneau interne 41.

Le cadre amont 42 est prolongé au niveau de l'extrémité amont par des moyens de déflection 43 destinés, lorsque la porte 39 est ouverte, à réorienter une partie du flux d'air vers l'avant de la nacelle générant de ce fait une contre poussée.

Pour ce faire, les moyens de déflexion 43 sont dans un plan de déflexion sensiblement perpendiculaire au plan de la porte entre une première position rétractée dans laquelle les moyens de déflexion 43 ne pénètrent pas dans la veine annulaire 10 lorsque la porte 39 est en position de fermeture et une deuxième position déployée dans laquelle les moyens de déflexion 43 viennent en saillie de la porte 39.

Les moyens de déflexion 43 peuvent comprendre au moins deux moyens de déflection 43a et 43b montés de part et d'autre d'un axe médian Δₘ de la porte 39.

Comme représenté sur les figures 4 à 6, chaque moyen de déflexion 43a, 43b est associé à ses extrémités 51 a, 51 b, 53a et 53b à un bras d'articulation 61 a, 61 b, 63a et 63b mobile en rotation suivant un axe de pivotement sensiblement perpendiculaire au plan de déflexion permettant un déplacement rectiligne dudit moyen de déflexion 43a, 43b dans le plan de déflexion lors du passage de la position rétractée à la position déployée.

Ainsi, grâce au bras d'articulation 61 a, 61 b, 63a et 63b, les moyens de déflection 43a, 43b sont mis en mouvement selon un déplacement sensiblement rectiligne dans le plan de déflexion. La porte de l'invention 39 présente ainsi un système de déflexion simple à installer, non encombrant et fiable à utiliser.

En outre, le déplacement rectiligne des moyens de déflection 43a, 43b autorise que la totalité de la surface des moyens de déflection 43a, 43b puisse être au contact du flux d'air dévié. Par conséquent, grâce à la porte de l'invention 39, la taille des moyens de déflection 43a, 43b peut être optimisée en fonction de la taille désirée de la surface en contact avec le flux d'air dévié.

De manière avantageuse, le réglage de la cinématique des moyens de déflection 43a, 43b peut être réalisé simplement par le réglage de la cinématique des bras d'articulation 61 a, 61 b, 63a et 63b.

Il est également possible de reprendre les efforts aérodynamiques des moyens de déflection 43a, 43b par les bras d'articulation 61 a, 61 b, 63a et 63b sans avoir recours à des dispositifs supplémentaires de type glissière ou patin de frottement.

Il est enfin envisageable de synchroniser l'ensemble des moyens de déflection 43a, 43b lorsque lesdits moyens atteignent la position déployée.

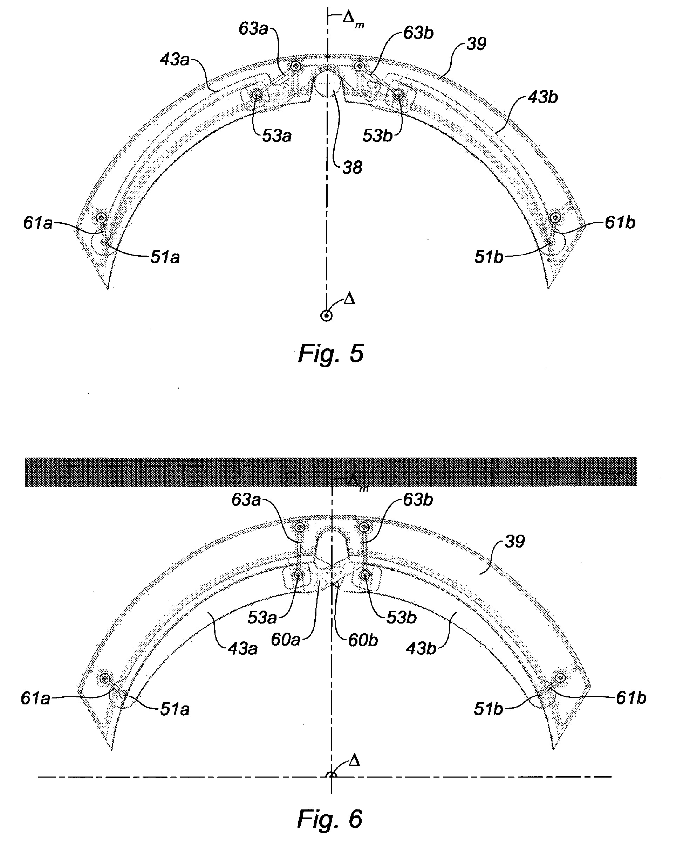

Comme représenté sur la figure 6, les moyens de déflexion 43a et 43b peuvent comprendre chacun un moyen de butée 60a et 60b disposé à une extrémité 53a et 53b de chaque moyen de déflexion de sorte à bloquer la position des moyens de déflexion 43a, 43b en position déployée ce qui permet de limiter le déploiement des moyens de déflection 43a, 43b et d'éviter d'endommager les extrémités voisines de deux moyens de déflection 43a, 43b. Les moyens de butée 60a et 60b peuvent avoir une forme sensiblement en V ce qui permet de manière avantageuse de synchroniser les moyens de déflection 43a, 43b et de garantir une symétrie de la trajectoire desdits moyens 43a, 43b.

Les bras d'articulation 61 a, 61 b, 63a et 63b sont fixés à la fois sur la porte 39 et à chaque extrémité d'un moyen de déflection 43a, 43b. Les bras 61 a, 61 b, 63a et 63b peuvent avoir une longueur adaptée suivant la course désirée suivie par chaque moyen de déflection 43a et 43b. Dans le cas du mode de réalisation de la figure 2, les bras d'articulation 61 a et 63a ont une longueur augmentant avec la largeur des moyens de déflection 43a et 43b, autrement dit avec l'augmentation de la surface en contact avec le flux d'air. Ainsi, chaque bras d'articulation 61 b et 63b fixé à proximité de l'axe médian Δₘ de la porte 39 a une longueur plus grande que les bras d'articulation 61 a et 63a fixés à distance dudit axe médian Δₘ.

Il est ainsi possible d'augmenter ou de diminuer la surface en contact avec le flux d'air en modifiant la longueur de chaque bras d'articulation 61 a, 61 b, 63a et 63b.

Les bras d'articulation 61 a, 61 b, 63a et 63b peuvent comporter à chaque extrémité au moins un moyen de retour élastique, notamment sous la forme de ressort à spirale, permettant de passer de la position rétractée à la position déployée ce qui permet de manière simple et efficace d'assurer le retour à la position déployée lorsque la nacelle 1 de l'invention recevant la porte 39 est en position d'inversion de poussée. Un bras d'articulation 61 a, 61b, 63a et 63b peut ainsi comporter à chaque extrémité une pluralité de ressorts à spirales ce qui autorise le fonctionnement des bras d'articulation 61 a, 61 b, 63a et 63b même lorsqu'un ressort fonctionne mal ou ne fonctionne plus.

Le vérin de porte 38 permettant à la porte 39 de passer de la position d'ouverture à la position de fermeture, peut être disposé de sorte à recevoir et à bloquer une des extrémités 61 b et 63b de deux moyens de déflection 43a, 43b en position rétractée, ce qui permet un gain de place et de masse tout en permettant une retenue efficace desdits moyens de déflection 43a et 43b. Les extrémités peuvent être adjacentes et à proximité de l'axe médian Δₘ.

Dans une variante, l'OFS 9, notamment le cadre amont 32, peut comprendre des moyens de butée de sorte à recevoir et à bloquer une des extrémités de deux moyens de déflection 43a, 43b en position rétractée, notamment des extrémités adjacentes.

Bien que l'invention ait été décrite en liaison avec des exemples particuliers de réalisation, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Porte (39) pour inverseur de poussée d'une nacelle (1) d'un aéronef apte à être montée pivotante sur une structure fixe (9) de la nacelle (1) comprenant une surface interne (41) conçue pour s'intégrer à une veine annulaire (10) de circulation d'un flux d'air et une surface externe (40) conçue pour assurer la continuité aérodynamique externe de la nacelle (1) destinée à être équipée dudit inverseur de poussée,
ladite porte (39) étant équipée de moyens de déflexion (43a, 43b) du flux d'air disposés au niveau d'une extrémité amont de la porte (39) et montés mobiles dans un plan de déflexion sensiblement perpendiculaire au plan de la porte (39) entre une première position rétractée dans laquelle les moyens de déflexion (43a, 43b) ne pénètrent pas dans la veine annulaire (10) lorsque la porte (39) est en position de fermeture, et une deuxième position déployée dans laquelle les moyens de déflexion (43a, 43b) viennent en saillie de la porte (39) lorsque la porte (39) est en position d'ouverture, chaque moyen de déflexion (43a, 43b) étant associé à ses extrémités (51 a, 51 b, 53a, 53b) à un bras d'articulation (61 a, 61 b, 63a, 63b) mobile en rotation suivant un axe de pivotement sensiblement perpendiculaire au plan de déflexion permettant un déplacement rectiligne dudit moyen de déflexion (43a, 43b) dans le plan de déflexion lors du passage de la position rétractée à la position déployée, et
ladite porte comprenant un vérin de porte (38) permettant à la porte (39) de passer de la position d'ouverture à la position de fermeture, **caractérisé en ce que** ledit vérin (38) est disposé de sorte à recevoir et à bloquer les extrémités (53a, 53b) adjacentes de deux moyens de déflexion (43a, 43b) en position rétractée.

2. Porte (39) selon la revendication 1, dans laquelle les moyens de déflexion (43a, 43b) comprennent chacun un moyen de butée (60a, 60b) disposé à une extrémité (53a, 53b) de chaque moyen de déflexion (43a, 43b) de sorte à bloquer la position des moyens de déflexion (43a, 43b) en position déployée.

3. Porte (39) selon l'une quelconque des revendications 1 ou 2, dans laquelle les bras d'articulation (61 a, 61 b, 63a, 63b) comportent à chaque extrémité au moins un moyen de retour élastique permettant de passer de la position rétractée à la position déployée.

4. Porte (39) selon la revendication précédente, dans laquelle les moyens de retour élastique sont sous la forme de ressort à spirale.

5. Porte (39) selon l'une quelconque des revendications précédentes, dans laquelle les moyens de déflexion (43a, 43b) comprennent au moins deux becquets ou deux volets montés de part et d'autre d'un axe médian de la porte (39).

6. Système d'inverseur comprenant au moins une porte (39) selon l'une quelconque des revendications précédentes et une structure fixe (9) sur laquelle ladite porte (39) est montée pivotante entre une position de fermeture dans laquelle elle ferme l'inverseur de poussée et constitue une partie d'un capotage extérieur, les moyens de déflexion (43a, 43b) du flux étant en position rétractée, et une position d'ouverture dans laquelle elle dégage un passage dans la structure fixe (9) de sorte à dévier le un flux d'air, les moyens de déflexion (43a, 43b) étant en position déployée.

7. Système d'inverseur de poussée selon la revendication précédente, comprenant des moyens de butée fixés sur la structure fixe (9) de sorte à recevoir et à bloquer les extrémités (53a, 53b) adjacentes de deux moyens de déflection (43a, 43b) en position rétractée.

8. Nacelle (1) pour turboréacteur (6) comprenant au moins un système d'inverseur de poussée selon les revendications 6 ou 7.

## Patentansprüche

1. Tür (39) für eine Schubumkehr einer Gondel (1) eines Luftfahrzeugs, die in der Lage ist, schwenkbar auf einer festen Struktur (9) der Gondel (1) montiert zu werden, eine Innenfläche (41) umfassend, die gestaltet ist, um sich in einen ringförmigen Luftstrom-Zirkulationsgang (10) einzufügen, und eine Außenfläche (40), die gestaltet ist, um für die äußere aerodynamische Kontinuität der Gondel (1) zu sorgen, die dazu bestimmt ist, mit der besagten Schubumkehr ausgestattet zu werden,
wobei die besagte Tür (39) mit Ablenkmitteln (43a, 43b) des Luftstroms ausgestattet ist, die im Bereich eines stromauf gelegenen Endes der Tür (39) angeordnet sind und auf einer Ablenkebene, die in etwa senkrecht zur Ebene der Tür (39) verläuft, zwischen einer eingezogenen Position, in der die Ablenkmittel (43a, 43b) nicht in den ringförmigen Gang (10) eindringen, wenn sich die Tür (39) in Schließposition befindet, und einer zweiten entfalteten Position beweglich montiert sind, in der die Ablenkmittel (43a, 43b) über die Tür (39) hinausragen, wenn sich die Tür (39) in der Öffnungsposition befindet, wobei jedes Ablenkmittel (43a, 43b) an seinen Enden (51 a, 51 b, 53a, 53b) einem um eine Schwenkachse etwa senkrecht zur Ablenkebene drehbaren Gelenkarm (61 a, 61 b, 63a, 63b) zugeordnet ist, was eine geradlinige Bewegung des besagten Ablenkmittels (43a, 43b) auf der Ablenkebene beim Übergang von der eingezogenen in die entfaltete Position ermöglicht, und
wobei die besagte Tür einen Türzylinder (38) umfasst, der es der Tür (39) ermöglicht, von der Öffnungsposition in die Schließposition überzugehen, **dadurch gekennzeichnet, dass** der besagte Zylinder (38) derart angeordnet ist, um die angrenzenden Enden (53a, 53b) von zwei Ablenkmitteln (43a, 43b) in der eingezogenen Position aufzunehmen und zu blockieren.

2. Tür (39) nach Anspruch 1, wobei die Ablenkmittel (43a, 43b) jeweils ein Anschlagmittel (60a, 60b) umfassen, das an einem Ende (53a, 53b) eines jeden Ablenkmittels (43a, 43b) angeordnet ist, um die Position der Ablenkmittel (43a, 43b) in der entfalteten Position zu blockieren.

3. Tür (39) nach irgendeinem der Ansprüche 1 oder 2, wobei die Gelenkarme (61 a, 61 b, 63a, 63b) an jedem Ende zumindest ein elastisches Rückholmittel umfassen, das es ermöglicht, von der eingezogenen Position in die entfaltete Position überzugehen.

4. Tür (39) nach dem vorherigen Anspruch, wobei die elastischen Rückholmittel die Form einer Spiralfeder aufweisen.

5. Tür (39) nach irgendeinem der vorherigen Ansprüche, wobei die Ablenkmittel (43a, 43b) zumindest zwei Spoiler oder zwei Klappen umfassen, die beiderseits einer Mittelachse der Tür (39) montiert sind.

6. Umkehrsystem, zumindest eine Tür (39) nach irgendeinem der vorherigen Ansprüche und eine feste Struktur (9) umfassend, auf der die besagte Tür (39) zwischen einer Schließposition, in der sie die Schubumkehr schließt und einen Abschnitt einer Außenverkleidung bildet, wobei sich die Ablenkmittel (43a, 43b) des Stroms in der eingezogenen Position befinden, und einer Öffnungsposition schwenkbar montiert ist, in der sie einen Durchlass in der festen Struktur (9) freigibt, um den Luftstrom umzuleiten, wobei sich die Ablenkmittel (43a, 43b) in der entfalteten Position befinden.

7. Schubumkehrsystem nach dem vorherigen Anspruch, Anschlagmittel umfassend, die auf der festen Struktur (9) befestigt sind, um die angrenzenden Enden (53a, 53b) von zwei Ablenkmittel (43a, 43b) in der eingezogenen Position aufzunehmen und zu blockieren.

8. Gondel (1) eines Turbotriebwerks (6), zumindest eine Schubumkehr nach den Ansprüchen 6 und 7 umfassend.

## Claims

1. A door (39) for a nacelle (1) thrust reverser of an aircraft able to be pivotally mounted on a stationary structure (9) of the nacelle (1) comprising an inner surface (41) designed for being integrated to an annular stream (10) for the circulation of an air flow and an outer surface (40) designed for ensuring the outer aerodynamic continuity of the nacelle (1) intended to be equipped with said thrust reverser,
said door (39) being equipped with means (43a, 43b) for deflecting the air flow disposed at an upstream end of the door (39) and movably mounted in a deflection plane substantially perpendicular to the plane of the door (39) between a first retracted position in which the deflection means (43a, 43b) do not penetrate in the annular stream (10) when the door (39) is in closing position, and a second deployed position in which the deflection means (43a, 43b) protrude from the door (39) when the door (39) is in opening position, each deflection means (43a, 43b) being associated at its ends (51 a, 51 b, 53a, 53b) to an articulation arm (61 a, 61 b, 63a, 63b) movable in rotation along a pivoting axis substantially perpendicular to the deflection plane allowing a rectilinear displacement of said deflection means (43a, 43b) in the deflection plane during the passage from the retracted position to the deployed position, and
said door comprising a door jack (38) allowing the door (39) to pass from the opening position to the closing position **characterized in that** said jack (38) is disposed such as to receive and lock the adjacent ends (53a, 53b) of two deflection means (43a, 43b) in retracted position.

2. The door (39) according to claim 1, wherein the deflection means (43a, 43b) each comprise an abutment means (60a, 60b) disposed at an end (53a, 53b) of each deflection means (43a, 43b) so as to lock the position of the deflection means (43a, 43b) in deployed position.

3. The door (39) according to any one of claims 1 or 2, wherein the articulation arms (61 a, 61 b, 63a, 63b) include at each end at least one elastic return means allowing to pass from the retracted position to the deployed position.

4. The door (39) according to the preceding claim, wherein the elastic return means are in the form of a spiral spring.

5. The door (39) according to any one of the preceding claims, wherein the deflection means (43a, 43b) comprise at least two spoilers or two shutters mounted on either side of a median axis of the door (39).

6. A thrust reverser system including at least one door (39) according to any one of the preceding claims and a stationary structure (9) on which said door (39) is pivotally mounted between a closing position in which it closes the thrust reverser and constitutes a part of an external cowling, the means (43a, 43b) for deflecting the flow being in retracted position, and an opening position in which it clears a passage in the stationary structure (9) so as to divert the air flow, the deflection means (43a, 43b) being in a deployed position.

7. The thrust reverser system according to the preceding claim, comprising abutment means secured on the stationary structure (9) so as to receive and lock the adjacent ends (53a, 53b) of two deflection means (43a, 43b) in a retracted position.

8. A turbojet engine (6) nacelle (1) comprising at least one thrust reverser system according to claims 6 or 7.
